# EUROPÄISCHE PATENTANMELDUNG

(11) **EP 1 643 044 A2**
(43) Veröffentlichungstag der Anmeldung: **05.04.2006**
(21) Anmeldenummer: 05021586.2
(22) Anmeldetag: 04.10.2005
(51) Int. Cl.: E03F 7/12, G01N 22/02, G01S 13/89, G01V 3/15

(54) **Kanalinspektionsfahrzeug und Verfahren zur Kanalinspektion**

(30) Priorität: 02.10.2004 DE 102004048170
(71) Anmelder: GBM Wiebe Gleisbaumaschinen GmbH, 28832 Achim (DE)
(72) Erfinder: Nießen, Jürgen, 28357 Bremen (DE)
(74) Vertreter: Klinghardt, Jürgen

(57) **Zusammenfassung**

Die Erfindung betrifft ein Kanalinspektionsfahrzeug (10) mit einem Georadarmeskopf (12) einem Aufnahmeelement (14) für den Georadarmesskopf (12) und Mitteln zum translatorischen Bewegen (30, 32, 60) des Kanalinspektionsfahrzeugs (10) und Antriebsmitteln (38) für das Aufnahmeelement (14) zum Bewegen des Georadarmesskopfs auf einer ebenen, geschlossenen Bahn, die in einer Ebene liegt, die senkrecht zu der Richtung der translatorischen Bewegung verläuft. Erfindungsgemäß ist ein Positionssensor bereitgestellt zur Bestimmung der Position des Georadarmesskopfes.

Ferner betrifft die Erfindung ein Verfahren zur Kanalinspektion mit den Schritten: a) Bewegen eines Georadarmesskopfs (12) durch einen Kanal (76) entlang einer Messkopfbahn (78), die gebildet ist als Kombination einer Bewegung entlang einer translatorischen Bahn (79) und einer Bewegung auf einer ebenen, geschlossenen Bahn (77), die in einer Ebene liegt, die senkrecht zu der Richtung der translatorischen Bewegung verläuft und b) Aufnehmen von Georadarmesspunkten an Positionen auf dieser Messkopfbahn (78), insbesondere an vorbestimmten Positionen auf dieser Messkopfbahn (78), wobei ein Radarimpuls aufgrund einer von einem Positionssensor bei einem vorbestimmten Drehwinkel veranlassten Triggerimpuls abgegeben wird.

## Beschreibung

Die Erfindung betrifft ein Kanalinspektionsfahrzeug mit einem Georadarmesskopf, einem Aufnahmeelement für den Georadarmesskopf und Mitteln zum translatorischen Bewegen des Kanalinspektionsfahrzeugs und mit Antriebsmitteln für das Aufnahmeelement zum Bewegen des Georadarmesskopfs auf einer ebenen, geschlossenen Bahn, die in einer Ebene liegt, die senkrecht zu der Richtung der translatorischen Bewegung verläuft. Ferner betrifft die Erfindung ein Verfahren zur Kanalinspektion.

Bekannt sind Kanalinspektionsfahrzeuge mit einem Georadarmesskopf, die mittels eines Seils entlang einer translatorischen Bahn durch einen Kanal gezogen werden. Während der Bewegung durch den Kanal sendet der Georadarmesskopf unter einem vorher fest eingestellten Winkel gegen die Horizontale Radarwellen aus, die an Schichtgrenzen im den Kanal umgebenden Erdkörper reflektiert werden. Die reflektierten Georadarwellen werden vom Georadarmesskopf gemessen und an eine Auswerteeinheit weitergeleitet. Gleichzeitig wird die Position des Georadarmesskopfs auf seiner translatorischen Bahn durch den Kanal bestimmt.

Aus den so gemessenen Position- und Georadardaten wird anschließend ein Tiefenprofil des den Kanal umgebenden Erdkörpers in Richtung des Winkels berechnet, um den der Georadarmesskopf gegen die Horizontale geneigt war. Durch mehrfaches Ziehen des Kanalinspektionsfahrzeugs durch den Kanal, wobei der Georadarmesskopf jeweils unter unterschiedlichen Winkel gegen die Horizontale geneigt ist, werden Georadar- und Positionsmessdaten aufgenommen, aus denen ein radiales Tiefenprofil des den Kanal umgebenden Erdkörpers berechnet wird.

Nachteilig an derartigen Kanalinspektionsfahrzeugen ist die schwierige Justage des Winkels, unter dem der Georadarmesskopf gegen die Horizontale geneigt ist, da das Kanalinspektionsfahrzeug beim Ziehen durch den Kanal leicht um seine Längsachse kippen kann. Ein weiterer Nachteil ist die schwierige und oftmals nur ungenau mögliche Positionsbestimmung entlang der translatorischen Bewegung durch den Kanal. Kommt es hier zu systematischen Abweichungen zwischen zwei Messfahrten, so ergeben sich leicht Fehler im berechneten Radialtiefenprofil.

Aus DE 42 43 201 ist eine Vorrichtung zur Materialuntersuchung bekannt, bei der ein Fahrzeug schrittweise mit einer daran montierten Antenne durch einen Kanal bewegt wird. Die Antenne wird bei jedem Schritt rotiert und aus einem Vergleich des Sendesignals mit dem Reflektionssignal können Hohl- und Fehlstellen aufgefunden werden. Alternativ kann die Antenne bei einer kontinuierlichen Vorschubbewegung rotiert werden. Diese bekannte Vorrichtung ermöglicht zwar grundsätzlich die Erfassung von Hohl- und Fehlstellen, jedoch weist sie den Nachteil auf, dass eine exakte Lokalisierung der Fehlstelle aufgrund der durchgeführten Messung nicht möglich ist, sondern hierzu nach der Detektion einer Hohl- oder Fehlstelle eine aufwendige nachträgliche genaue Bestimmung der Lokalisation der Hohl- oder Fehlstelle erfolgen muss. Es ist aber heutzutage erforderlich, innerhalb kürzester Zeit eine Messung durchzuführen, die Fehlstellen aufzufinden und zu reparieren, um die Mess- und Reparaturdauer möglichst kurz zu halten. Zudem weist diese bekannte Vorrichtung den Nachteil auf, dass eine Zuordnung der Messdaten zu den Messorten erst nach einer aufwendigen Datenaufbereitung möglich ist. Dies verlängert die Zeit zwischen der Messung und dem Vorliegen des Messergebnisses zusätzlich.

Der Erfindung liegt daher das Problem zugrunde, ein Kanalinspektionsfahrzeugsystem und ein Kanalinspektionsverfahren bereitzustellen, welches eine Messung und Bereitstellung der Messergebnisse mit lokalisierten Fehl- und Hohlstellen in kürzerer Zeit ermöglicht als bekannte Systeme.

Die Erfindung löst dieses Problem mit einem Kanalinspektionsfahrzeug der eingangs genannten Art, bei dem ein Positionssensor bereitgestellt ist zur Bestimmung der Position des Georadarmesskopfes auf der ebenen geschlossenen Bahn. Gemäß eines weiteren Aspekts der Erfindung wird die Aufgabe gelöst durch ein Verfahren mit den Schritten:
- Bewegen eines Georadarmesskopfs durch einen Kanal entlang einer Messkopfbahn, die gebildet ist als Kombination einer Bewegung entlang einer translatorischen Bahn und einer Bewegung auf einer ebenen, geschlossenen Bahn, die in einer Ebene liegt, die senkrecht zu der Richtung der translatorischen Bewegung verläuft,
- Aufnehmen von Georadarmesspunkten auf dieser Messkopfbahn, insbesondere an vorbestimmten Positionen auf dieser Messkopfbahn, wobei ein Radarimpuls aufgrund einer von einem Positionssensor bei einem vorbestimmten Drehwinkel veranlassten Triggerimpuls abgegeben wird.

Unter einem Kanalinspektionsfahrzeug wird ein technisches Gerät verstanden, das ausgebildet ist, um durch einen Kanal bewegt zu werden, um dessen baulichen Zustand zu ermitteln. Es ist dabei nicht notwendig, dass sich das Kanalinspektionsfahrzeug aus eigener Kraft durch den Kanal bewegen kann.

Unter einer ebenen, geschlossene Bahn wird auch eine Bahn verstanden, bei welcher der Georadarmesskopf eine Hin- und Herbewegung auf einer im Wesentlichen geschlossenen, ebenen Bahn ausführt.

Vorteilhaft an der Erfindung (in ihren Aspekten) ist, dass das Kanalinspektionsfahrzeug lediglich einmal durch den entsprechenden Kanal bewegt werden muss, um ein vollständiges Tiefenprofil aus den aufgenommenen Messdaten ermitteln zu können. Auf dieser einen Messfahrt werden alle Messdaten aufgenommen, die für die Berechnung eines radialen Tiefenprofils des Kanals, sowie des den Kanal umgebenden Erdkörpers notwendig sind. Dadurch, dass sich der Georadarmesskopf entlang einer Bahn bewegt, die sich als Kombination einer Bewegung entlang einer translatorischen Bahn und einer Bewegung auf einer ebenen, geschlossenen Bahn ergibt, die in einer Ebene liegt, die senkrecht zu der Richtung der translatorischen Bewegung verläuft, kann die Auflösung des aus den Messpunkten ermittelten radialen Tiefenprofils im Wesentlichen frei festgelegt werden, ohne dass mehrere Fahrten des Kanalinspektionsfahrzeugs durch den Kanal notwendig sind.

Ein weiterer Vorteil ist, dass sich Ungenauigkeiten in der Positionsbestimmung entlang der translatorischen Bahn, also in Erstreckungsrichtung des Kanals, nur unwesentlich auf den zu berechnenden radialen Tiefenverlauf auswirken.

Vorteilhaft ist zudem eine Ersparnis an Messzeit, da das Kanalinspektionsfahrzeug lediglich einmal justiert werden muss und dass sich insbesondere dadurch menschliche Eingriffe während einer Kanalinspektion deutlich vermindern lassen.

In einer bevorzugten Ausführungsform weist das Kanalinspektionsfahrzeug ein Aufnahmeelement auf, das derart ausgebildet ist, um den Georadarmesskopf auf einer Kreisbahn zu bewegen, insbesondere ihn um seine Achse zu rotieren. Viele Kanäle weisen einen kreisrunden Querschnitt auf. Durch Bewegen des Georadarmesskopfs auf einer Kreisbahn kann diese Kontur nachgefahren werden. Besonders günstig ist es, die Kreisbahn konzentrisch zum Querschnitt des Kanals zu wählen. In diesem Fall hat der Georadarmesskopf stets den gleichen Abstand von der Kanalwand und die Radarwellen treffen stets senkrecht auf die Kanalwand auf. Die so erhaltenen Messdaten können direkt in einen Zylinder Koordinatensystem dargestellt werden, bei dem die z-Achse der Längsachse des Kanals entspricht. Auch bei anderen Kanalquerschnitten, beispielsweise einem aufrecht stehenden Oval ist das beschriebene Aufnahmeelement vorteilhaft, da sich ein besonders einfacher und damit robuster mechanischer Aufbau ergibt.

Sofern die Mittelpunkte von Kreisbahn und Querschnitt des Kanals nicht übereinstimmen, werden die gemessenen Tiefenprofile dadurch korrigiert, dass das (starke) Georadarsignal, das die Reflektion der Georadarwellen an der Kanalwand verursacht, zur Festlegung der Nulllage in der Auswertung herangezogen wird.

Eine besonders einfache Ausführungsform ergibt sich, wenn der Georadarmesskopf um seine eigene Achse rotiert. In diesem Fall kann das Kanalinspektionsfahrzeug mit einer sehr kleinen radialen Ausdehnung gebaut werden, so dass auch Kanäle mit einem kleinen Durchmesser inspizierbar sind.

In einer bevorzugten Ausführungsform ist der Georadarmesskopf so angeordnet, dass die Radarwellen jeweils in eine Richtung abgestrahlt werden, die in der Ebene verläuft, in der die ebene, geschlossene Bahn liegt, die senkrecht zur Tangente an die ebene, geschlossene Bahn verläuft und die relativ zur ebenen, geschlossenen Bahn nach außen weist. Wenn es sich bei der ebenen, geschlossenen Bahn um eine Kreisbahn handelt, so ist die angegebene Richtung die bezüglich des Mittelpunkts des Kreises radial nach außen weisende Richtung. Vorteilhaft hieran ist, dass die Radarwellen nur einen sehr kurzen Weg bis in den zu vermessenen Erdkörper zurückzulegen haben.

Wenn die ebene, geschlossene Bahn die gleiche Form hat wie der Querschnitt des zu untersuchenden Kanals, wird durch diese Abstrahlrichtung zudem erreicht, dass die Radarwellen jeweils senkrecht auf die Kanalwand auftreffen. In diesem Fall ergibt sich aus der Georadarmessung ein Tiefenprofil, das in Normalen-Richtung zur Kanalwand verläuft. Die Normalen-Richtung steht senkrecht auf der Tangente des Kanals. Auf diese Art und Weise erhaltene (bspw. radiale) Tiefenverläufe können besonders einfach interpretiert werden, da die durch Vermessung mit Georadar erhaltene Tiefe den Abstand vom entsprechend nächstliegenden Punkt auf dem Querschnitt des Kanals angibt. Die ermittelte Tiefe entspricht also, nach Abzug des Offsets, der durch den Weg der Radarwellen von Georadarmesskopf bis zur Kanalwand verursacht wird, der Tiefe die auch durch direktes Aufsetzen eines Georadarmesskopfs auf die Kanalwand erhalten wird.

Bevorzugt ist ein Kanalinspektionsfahrzeug, bei dem der Georadarmesskopf eine Georadarmesskopf-Steuerung zur Erzeugung gepulster Radarwellen umfasst. Gepulste Radarwellen eignen sich besonders gut, um Tiefenprofile zu ermitteln. Hierzu werden die Laufzeiten von reflektierten Radarwellen gemessen. Aus der Stärke des reflektierten Signals ergibt sich die Struktur, an der die Radarwellen reflektiert wurden und aus der entsprechenden Laufzeit der Abstand der reflektierenden Struktur im Erdkörper vom Georadarmesskopf.

Bevorzugt ist ein Kanalinspektionsfahrzeug, bei dem die Georadarmesskopf-Steuerung ausgebildet ist, um Georadarwellenimpulse mit einer Pulsdauer von unter 20 ns, insbesondere unter 3 ns zu erzeugen.

Die Georadarmesskopf-Steuerung ist dabei vorzugsweise so ausgebildet, dass die aufeinander folgenden Georadarwellenimpulse in einem festen zeitlichen Abstand voneinander abgestrahlt werden. Die Frequenz, mit der die Georadarwellenimpulse abgestrahlt werden, ist die Impulsfolgefrequenz. Kurze Georadarwellenimpulse werden erzeugt, indem beispielsweise mittels einer one-shot-Schaltung, die Bestandteil der Georadarmesskopf-Steuerung ist, kurze elektrische Impulse erzeugt werden, auf einen Radarsender gegeben werden. Je kürzer die Georadarwellenimpulse sind, desto höher ist die Ortsauflösung in der Tiefe.

Besonders bevorzugt ist dabei ein Kanalinspektionsfahrzeug, bei dem der Georadarmesskopf Empfangsmittel umfasst, die vorzugsweise mit der Georadarmesskopf-Steuerung in Verbindung stehen, zum:
- Empfangen von reflektierten Georadarwellenimpulsen und
- Messen der Feldstärke der reflektierten Georadarwellenimpulsen zu unterschiedlichen, vorzugsweise zeitlich äquidistant zueinander liegenden, Zeitpunkten nach Senden des jeweiligen Georadarwellenimpulses.

Die reflektierten Georadarwellenimpulsen werden durch eine Antenne empfangen. An diese Antenne ist eine elektronische Auswerteschaltung angeschlossen. Diese Auswerteschaltung ermittelt die Feldstärke der reflektierten Georadarwellenimpulse zu unterschiedlichen, vorzugsweise zeitlich äquidistant zueinander liegenden, Zeitpunkten nach Senden des jeweiligen Georadarwellenimpulses. Hierzu ist die Auswerteschaltung so ausgebildet, dass der zeitliche Abstand von dem vorangegangenen kurzen elektrischen Impuls ermittelt wird, beispielsweise, indem die Auswerteschaltung mit der one-shot-Schaltung verbunden ist. Nach Ablauf einer festgelegten Zeit wird dann die Feldstärke des reflektierten Georadarwellenimpulses gemessen.

Zeitlich äquidistant zueinander liegende Zeitpunkte werden dadurch erhalten, dass die Auswerteschaltung zu Zeitpunkten nach Erzeugung der kurzen elektrischen Impulse die Feldstärke misst, deren zeitlicher Abstand voneinander konstant ist. Wenn die reflektierten Georadarwellenimpulse alle gleich sind, beispielsweise, weil sich Georadarmesskopf zwischen zwei dem Senden von zwei aufeinander folgenden Georadarwellenimpulsen nicht oder fast bewegt hat, so wird durch das beschriebene Vorgehen ein wenig aufwendiges Abtasten (Sampling) der reflektierten Georadarwellenimpulse erreicht. Die durch ein derartiges Abtasten erhaltenen Georadardaten werden Georadarscan genannt.

Es ist bevorzugt, dass die Georadarmesskopf-Steuerung so zum Steuern des Georadarmesskopfs ausgebildet ist, dass dieser Radarwellen abgibt, die aus wenigen, bspw. maximal 5 bis 10, Schwingungsperioden bestehen, insbesondere nur aus einer einzigen Schwingungsperiode. Je kürzer der Radarwellenimpuls ist, desto präziser lässt sich aus der Laufzeit des reflektierten Signals der Abstand der reflektierenden Struktur vom Georadarmesskopf erfassen. Gleichzeitig steigt mit abnehmender Länge des Radarwellenimpulses die Ortsauflösung. Das heißt, dass scharf begrenzte, lokale Defektstrukturen im Kanal bzw. im anstehenden Erdkörper auch als scharfes Reflektionssignals detektiert werden können, da sie zu einem scharfen Peak führen. Je länger der Radarwellenimpuls ist, desto breiter wird der gemessene Peak. Zwar können derartige Verbreiterungen prinzipiell durch mathematische Verfahren aus den Messdaten herausgerechnet werden, hierbei müssen jedoch zusätzliche Fehler in den Messdaten hingenommen werden.

Besonders bevorzugt ist, dass mittels der Georadarmesskopf-Steuerung gepulste Radarwellen mit einer Impulsfolgefrequenz zwischen 30 kHz und 800 kHz erzeugbar sind. Die Impulsfolgefrequenz ergibt sich als das Inverse aus dem zeitlichen Abstand zweier Impulse.

Bevorzugt ist ein Kanalinspektionsfahrzeug mit mindestens einem Positionssensor zur Bestimmung der Position des Georadarmesskopfs auf der ebenen, geschlossenen Bahn und/oder entlang eines Bewegungspfads der translatorischen Bewegung. Aus der Kenntnis der Position des Georadarmesskopfs auf der ebenen, geschlossenen Bahn lässt sich bei Kenntnis der Lage der ebenen, geschlossenen Bahn relativ zum Kanal der Winkel bestimmten, um den der Georadarmesskopf gegen die Horizontale geneigt ist. Der Positionssensor dient damit einerseits dazu, den aufgenommenen Messpunkt diesem Winkel zuzuordnen.

Andererseits unterstützt der Sensor die Steuerung des Antriebsmittels für das Aufnahmeelement, so dass der Georadarmesskopf gezielt auf Positionen gefahren werden kann, bei denen er unter einem bestimmten Winkel gegen die Horizontale geneigt ist. In einem radialen Tiefenprofil stellt der Winkel, unter dem der Georadarmesskopf gegen die Horizontale geneigt ist, die erste Koordinate dar. Sofern es sich bei der ebenen, geschlossenen Bahn nicht um eine Kreisbahn handelt, ergibt sich aus der Position des Georadarmesskopfs auf der ebenen, geschlossenen Bahn auch die zweite Koordinate. Handelt es sich um eine Kreisbahn, so ist diese Koordinate konstant.

Ein Positionssensor zur Bestimmung der Position entlang des Bewegungspfads der translatorischen Bewegung dient zur Festlegung der dritten (z-)Koordinate des Georadarmesskopfs. Alle drei Koordinaten legen die Position und den Winkel des Georadarmesskopfes, unter dem dieser Radarwellen abstrahlt, eindeutig fest.

Besonders bevorzugt ist ein Kanalinspektionsfahrzeug, bei dem die Georadarmesskopf-Steuerung ausgebildet ist, um den Georadarmesskopf auf vorbestimmte Positionen auf der ebenen, geschlossenen Bahn zur gepulsten Abgabe von Radarwellen anzusteuern. Durch eine derartige Ansteuerung nimmt der Georadarmesskopf Georadarmesspunkte stets an festgelegten Neigungswinkeln gegen die Horizontale auf. Aus den bei einer Messfahrt durch einen Kanal aufgenommenen Georadarmesspunkte entsteht aus denjenigen Georadarmesspunkte, die zu einem festen Neigungswinkel gegen die Horizontale gehören, ein Linientiefenprofil in axialer Richtung des Kanals. Aus den Linientiefenprofilen aller Neigungswinkel lässt sich besonders leicht ein radialer Tiefenverlauf der Umgebung des Kanals errechnen. Vorteilhafterweise ist die Georadarmesskopfssteuerung als Triggersteuerung ausgeführt, so dass immer dann ein Georadarmessimpuls abgegeben wird, wenn sich der Georadarmesskopf auf einer vorgegebenen Position auf der ebenen, geschlossenen Bahn befindet. Die reflektierten Georadarsignale werden ebenfalls vom Georadarmesskopf detektiert. Auf diese Art und Weise ergibt sich ein Georadarscan für jeden Punkt, der sich auf einer entsprechend gegebenen Position auf der ebenen, geschlossenen Bahn befindet.

In einer bevorzugten Ausführungsform weist das Kanalinspektionsfahrzeug eine mit dem Georadarmesskopf in Verbindung stehende Sendeeinheit zum Senden der aufgenommenen Georadarmessdaten, die am Aufnahmeelement angeordnet ist, und eine mit der Sendeeinheit eine Funkschnittstelle bildende Empfangseinheit auf, die nicht am Aufnahmeelement angeordnet ist und die mit der Sendeeinheit eine Funkschnittstelle bildet. Wenn sich der Georadarmesskopf wiederholt auf einer ebenen, geschlossenen Bahn bewegt, würde es bei einer Kabelverbindung zwischen dem Georadarmesskopf bzw. dem Aufnahmeelement, an dem dieser angeordnet ist, und dem Aufbau, an dem das Aufnahmeelement entsprechend gelagert ist, zu einer Verdrillung kommen. Um die vom Georadarmesskopf aufgenommenen Georadarmessdaten sicher ohne Kabelverbindung zu übertragen, ist daher eine Funkschnittstelle vorgesehen. Es wird beispielsweise eine W-LAN- oder eine bluetooth-Schnittstelle eingesetzt.

Bevorzugt ist ein Kanalinspektionsfahrzeug, das einen auslesbaren Datenspeicher zur Aufnahme der vom Georadarmesskopf gemessenen Georadarmessdaten umfasst, insbesondere einen auslesbaren Datenspeicher, der am Georadarmesskopf angeordnet ist. In diesem Fall werden die Georadarmessdaten direkt in den Speicher geschrieben. Additiv werden auch Positionsdaten im Speicher abgelegt. Die Daten können nach Beendigung der Messaufgabe ebenfalls direkt aus dem Speicher in eine Ausleseeinheit ausgelesen werden. Eine derartige Ausleseeinheit wird in der Regel ein Rechner sein, an dem auch die Bearbeitung der Messdaten erfolgt. Wenn der Datenspeicher am Aufnahmeelement für den Georadarmesskopf angeordnet ist, so ist eine Funkschnittstelle erheblich.

In einem bevorzugten Verfahren wird aus den aufgenommenen Georadarmesspunkten das radiale Tiefenprofil des zu inspizierenden Kanals berechnet.

Bevorzugt ist ein Verfahren, bei dem die ebene, geschlossene Bahn die Form des Querschnitts des zu inspizierenden Kanals hat. Wird der Georadarmesskopf zusätzlich so bewegt, dass der Schwerpunkt der ebenen, geschlossenen Bahn mit dem Schwerpunkt des Querschnitts des Kanals übereinstimmt, so gibt die aus den gemessenen Laufzeitunterschieden errechnete Tiefe den Abstand von der Kanalwand an. Ein auf diesen Daten basierendes radiales Tiefenprofil ist besonders einfach zu interpretieren. Unter dem Abstand wird hier die kürzeste Verbindung zwischen einem Punkt und einer Kurve verstanden.

Bevorzugt ist ein Verfahren, bei dem die ebene, geschlossene Bahn eine Kreisbahn ist, auf welcher der Georadarmesskopf rotiert. Durch seine endliche Ausdehnung beschreibt der Georadarmesskopf auch dann eine Kreisbahn, wenn er um seine eigene Achse rotiert.

Besonders bevorzugt ist ein Verfahren, bei dem das Aufnehmen von Georadarmesspunkten die folgenden Schritte umfasst:
- Senden von aufeinander folgenden Georadarwellenimpulsen,
- Empfangen von reflektierten Georadarwellenimpulsen und
- Messen der Feldstärke der reflektierten Georadarwellenimpulsen zu unterschiedlichen, vorzugsweise zeitlich äquidistant zueinander liegenden, Zeitpunkten nach Senden des jeweiligen Georadarwellenimpulses Bevorzugt ist ein solches Verfahren, bei dem die Georadarwellenimpulse eine Pulsdauer von unter 20 ns, insbesondere unter 3 ns haben.

In einer bevorzugten Ausführungsform wird der Georadarmesskopf gepulst betrieben, insbesondere mit einer Impulsfolgefrequenz zwischen 30 kHz und 800 kHz.

Bevorzugt ist, dass die Vorschubgeschwindigkeit in Richtung der translatorischen Bewegung zwischen 0,2 m/s und 20 m/s, insbesondere zwischen 0,5 m/s und 3 m/s beträgt. Es hat sich herausgestellt, dass Geschwindigkeiten, die in dem genannten Geschwindigkeitsintervalle liegen, einen guten Kompromiss zwischen einer hohen Ortsauflösung und einer hinreichenden Arbeitsgeschwindigkeit darstellen.

Bevorzugt ist zudem ein Verfahren, bei dem ein Kanalinspektionsfahrzeug der oben genannten Art eingesetzt wird.

Im Folgenden wird die Erfindung anhand der Zeichnung näher erläutert. Dabei zeigt:
- Figur 1: ein Kanalinspektionsfahrzeug gemäß einem Ausführungsbeispiel der Erfindung von der Seite,
- Figur 2: eine schematisierte Darstellung der zur Erzeugung von Georadarwellenimpulsen verwendeten elektrischen Impulse und der vom Georadarmesskopf aufgenommenen reflektierten Georadarwellenimpulse bei Ausführung eines Verfahrens gemäß einem Ausführungsbeispiel der Erfindung,
- Figur 3: eine Frontansicht eines alternativen Aufnahmeelements für den Georadarmesskopf für ein Kanalinspektionsfahrzeug gemäß einem Ausführungsbeispiel der Erfindung,
- Figur 4: eine perspektivische Ansicht eines Kanalinspektionsfahrzeuges gemäß einem Ausführungsbeispiel der Erfindung in einem Kanal und
- Figur 5: einen Querschnitt durch einen Kanal mit kreisrundem Querschnitt mit Messpositionen des Georadarkopfes bei Ausführung eines Verfahrens gemäß einem Ausführungsbeispiel der Erfindung.

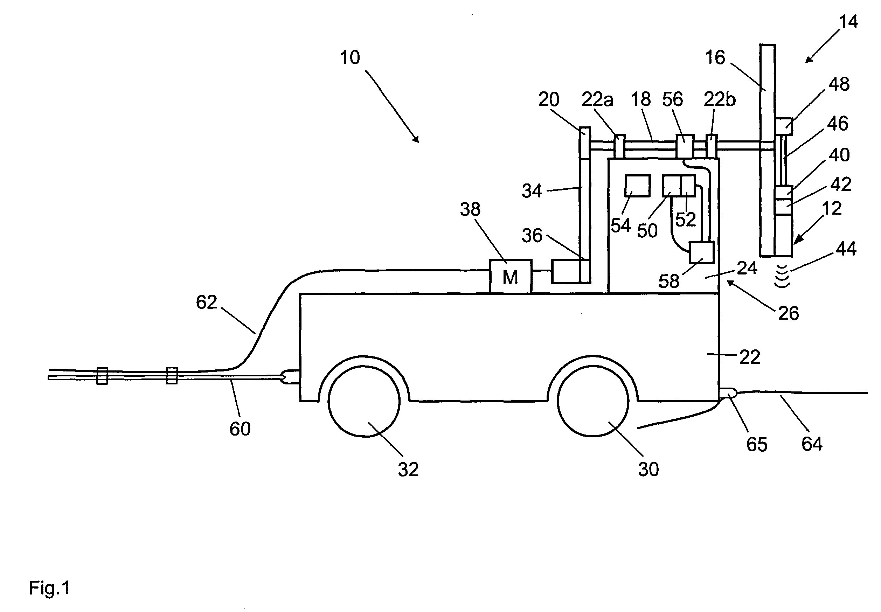

Figur 1 zeigt ein Kanalinspektionsfahrzeug 10, das einen Georadarmesskopf 12 und ein Aufnahmeelement 14 für den Georadarmesskopf 12 umfasst. Der Georadarmesskopf 12 ist mittels Schrauben lösbar am Aufnahmeelement 14 befestigt. Das Aufnahmeelement 14 umfasst einen Halter 16, an dem der Georadarmesskopf 12 befestigt ist, eine Welle 18 und ein Zahnrad 20. Die Welle 18 ist über zwei Kugellager 22a, 22b gelagert, die an einem durch zwei U-Bleche 24 gebildeten Aufbau 26 befestigt sind.

Der Aufbau 26 ist an einem Chassis 28 angeordnet, an dem auch zwei Räder 30, 32 angeordnet sind. Die Räder 30, 32 sind jeweils über zwei (hier nicht eingezeichnete) Wellen am Chassis 28 gelagert, wobei die Drehachsen dieser Wellen senkrecht zur Drehachse der Welle 18 verlaufen. In einer alternativen Ausführungsform wird auf die Räder verzichtet und statt dessen sind Gleitkufen vorgesehen. Alternativ wird ein Ketten- oder ein sonstiger Antrieb eingesetzt.

Das Zahnrad 20 greift in einen Zahnriemen 34, der wiederum in ein Zahnrad 36 eingreift. Das Zahnrad 36 ist mit einem elektrischen Motor 38 verbunden. Der Motor 38 bewegt das Aufnahmeelement 14 so, dass sich der Georadarmesskopf 12 auf einer Kreisbahn bewegt. Diese Kreisbahn verläuft in einer Ebene senkrecht zur Zeichenebene.

Der Georadarmesskopf 12 umfasst eine Georadarmesssteuerung 40. Diese wiederum umfasst zur Stromversorgung einen Akku 42. Durch die Georadarmesskopf-Steuerung 40 wird der Georadarmesskopf 12 so angesteuert, dass er gepulste Radarwellen 44 abgibt, siehe unten. An Hindernissen oder Schichtgrenzen reflektierte Radarwellen werden ebenfalls vom Georadarmesskopf 12 aufgefangen und die so gewonnenen Georadarmessdaten über ein Kabel 46 an eine Sendeeinheit 48 übermittelt. Die Sendeeinheit 48 wird ebenfalls über den Akku 42 mit elektrischer Energie versorgt. Sie bildet zusammen mit einer Empfangseinheit 50 eine Funkschnittstelle. Dabei empfängt die Empfangseinheit 50 die von der Sendeeinheit 48 abgegebenen elektromagnetischen Wellen und speichert die so empfangenen Georadarmessdaten in einem Speicher 52. Die Empfangseinheit 50 und der Speicher 52 werden durch einen Akku 54 mit Strom versorgt.

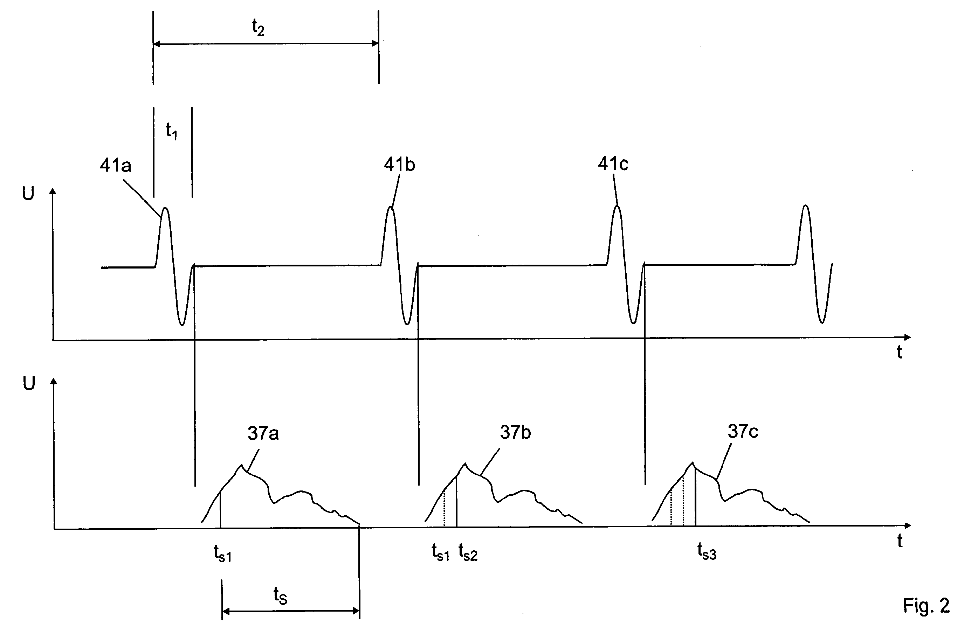

Figur 2 zeigt im oberen Diagramm schematisch über der Zeit t aufgetragene, kurze elektrische Impulse 41 a, 41 b, 41c,..., die an einen Radarsender abgegeben werden, der Bestandteil der Georadarmesssteuerung 40 ist. Die zeitliche Länge t1 dieser kurzen elektrischen Impulse 41 a, 41 b, 41c mit einer vorgegebenen Spannung U beträgt ca. 2 ns. Diese Impulse werden durch eine one-shot-Schaltung innerhalb einer Steuereinheit erzeugt, die ebenfalls Bestandteil der Georadarmesssteuerung 40 ist. Eine derartige one-shot-Schaltung umfasst beispielsweise eine Schottky-Diode.

Die Steuereinheit gibt in regelmäßigen Zeitabständen oder nach Empfang eines Triggerimpulses in einem gleichbleibenden zeitlichen Abstand von t2 derartige kurze elektrische Impulse 41 a, 41 b, 41 c ab. Der Radarsender erzeugt aufgrund dieser kurzen elektrischen Impulse entsprechende Georadarwellenimpulse und strahlt diese ab. Der zeitliche Abstand t2 liegt bei etwa 2,5 µs bis 10 µs.

So abgestrahlte Georadarwellenimpulse dringen in den Kanal und in den den Kanal umgebenden Erdkörper ein und werden an Grenzflächen, beispielsweise Rissen im Kanal reflektiert. Ein Teil der reflektierten Georadarwellenimpulse gelangt an eine Antenne, die Teil des Georadarmesskopfes ist, und wird dort registriert. In Figur 2 sind schematisch von der Antenne aufgenommene, reflektierte Georadarwellenimpulse 37a, 37b, 37c gezeigt.

Um die Digitalisierung der von der Antenne aufgenommenen Messwerte zu erleichtern, werden Stützstellen für die Digitalisierung an aufeinander folgenden reflektierten Georadarwellenimpulsen aufgenommen: So wird der erste Sampling-Punkt tₛ₁ am Radarwellenzug 37a aufgenommen, der nachfolgende, zweite Sampling-Punkt tₛ₁ am zweiten Radarwellenzug 37b, und so fort. Insgesamt werden so vorzugsweise 1024 Sampling-Punkte aufgenommen. Die Samplingzeit tₛ, also die Zeit, die vergehen würde, wenn an nur einem Radarwellenzug alle Sampling-Punkte aufgenommen werden würden, liegt je nach Anwendung zwischen 5 ns und 200 ns.

Diese Art des Samplings (d.h. der Abtastung der registrierten reflektierten Georadarwellenimpulse) führt zu keinem gravierenden Fehler gegenüber einem Sampling nur eines einzigen reflektierten Radarwellenzugs, da der Weg, den der Georadarmesskopf in der Zeit, in der im Beispiel 1024 Sampling-Punke aufgenommen werden, so klein ist, dass sich die Reflexionseigenschaften der Umgebung in guter Näherung nicht geändert haben. Durch die oben beschriebene Art des Samplings wird jedoch erreicht, dass für das Sampling kostengünstigere Bauteile verwendbar sind. Die so durch das Sampling erhaltenen Georadarmessdaten, die einen Georadarmesspunkt darstellen, werden an eine zentrale Steuerung 58 übermittelt und dort weiter verarbeitet, siehe unten.

Ein Positionssensor 56 erfasst den Winkel zwischen dem Aufbau 26 und der Welle 18 und leitet die gemessenen Winkel an diezentrale Steuerung 58 weiter.

An der dem Aufnahmeelement 14 abgewandeten Seite des Kanalinspektionsfahrzeugs 10 ist ein Stahlseil 60 fest mit dem Chassis 28 verbunden. An dem Stahlseil 60 ist ein elektrisches Kabel 62 angebracht, das zum Motor 38 führt und diesen mit elektrischem Strom versorgt. Mit Hilfe des Stahlseils 60 wird das Kanalinspektionsfahrzeug 10 durch einen Kanal gezogen. Dazu wird eine beispielsweise hier nicht eingezeichnete Motorwinde eingesetzt.

Auf der dem Stahlseil 60 gegenüberliegenden Seite, also auf der Seite des Kanalinspektionsfahrzeugs 10, an der das Aufnahmeelement 14 angebracht ist, läuft ein weitgehend inelastisches Kunststoffseil 64, das zur Bestimmung der Position entlang eines translatorischen Bewegungspfads dient, durch einen Wegmesser 65. Dieser erfasst den Weg, den das Kanalinspektionsfahrzeug relativ zum Kunststoffseil 64 zurückgelegt hat. Der Wegmesser übermittelt diese Position an die zentrale Steuerung 58. Alternativ wird beispielsweise ein Ultraschall- oder ein Lasermesssystem eingesetzt, um die Position des Kanalinspektionsfahrzeugs 10 entlang der translatorischen Bahn zu bestimmen. Dazu wird dessen Position relativ zu einer hier nicht eingezeichneten Vorrichtung gemessen, mit deren Hilfe das Kanalinspektionsfahrzeug durch den Kanal gezogen wird.

Nicht dargestellt ist eine optional vorhandene Videokamera, die am Kanalinspektionsfahrzeug angebracht ist. Deren Bilddaten werden ebenfalls an die zentrale Steuerung 58 übermittelt und im Speicher 52 abgelegt.

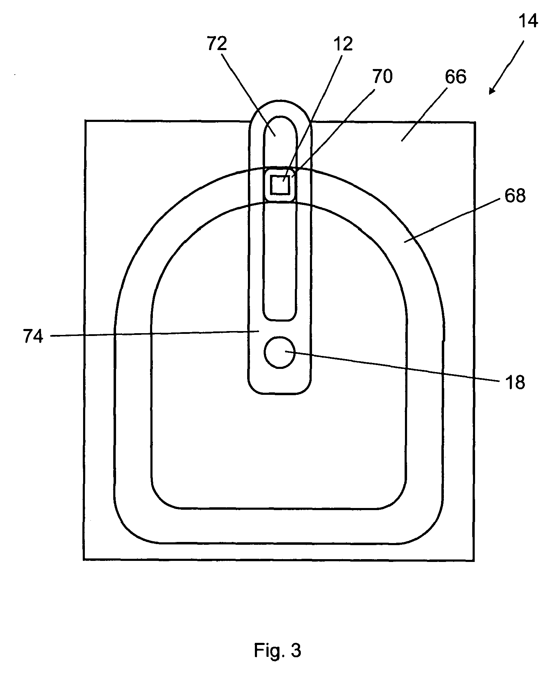

Figur 3 zeigt ein alternatives Aufnahmeelement 14 von vorne. In einer Stahlplatte 66 ist ein Schlitz 68 ausgebildet. In diesem Schlitz 68 läuft ein Kulissenstein 70, der zudem in einem Schlitz 72 geführt wird, der in einem Arm 74 ausgebildet ist. Der Arm 74 ist mit der Welle 18 fest verbunden. Wird die Welle 18 gedreht, so gleitet der Kulissenstein 70 im Schlitz 68 auf der durch den Schlitz beschriebenen Bahn, wobei ein auf dem Kulissenstein 70 angeordneter Georadarmesskopf 12 stets so orientiert ist, dass die von ihm ausgesandten Radarwellen jeweils in eine Richtung angestrahlt werden, die in der Ebene der Stahlplatte 66, und damit in der Ebene verläuft, in der die ebene, geschlossene Bahn liegt, die senkrecht zur Tangente an die ebene, geschlossene Bahn verläuft und die nach außen weist. Für die Form des Schlitzes 68 wird beispielsweise die Form des Querschnitts des zu untersuchenden Kanals gewählt.

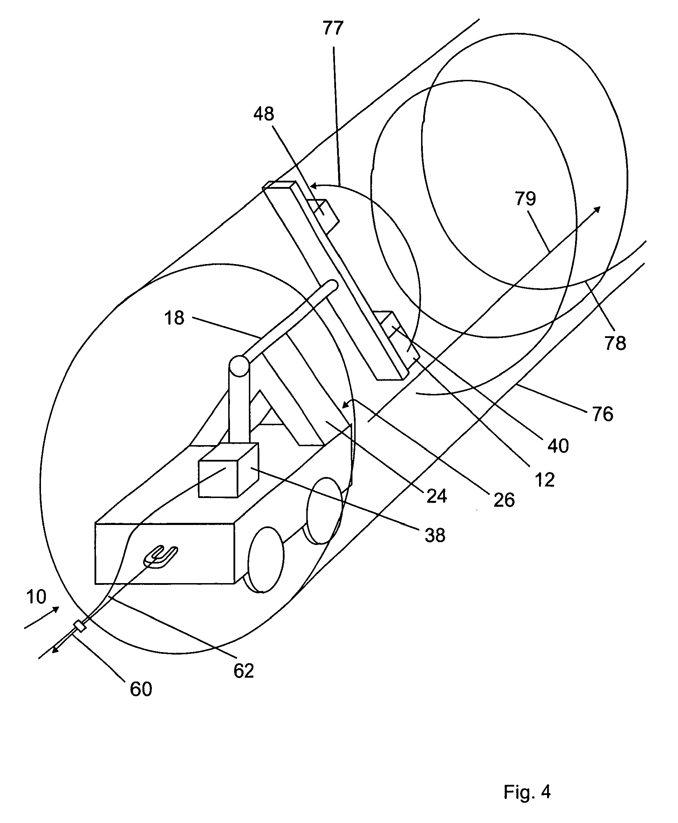

Figur 4 zeigt ein Kanalinspektionsfahrzeug 10 in einem Kanal 76. Zur Inspektion des Kanals 76 wird das Kanalinspektionsfahrzeug 10 am Stahlseil 60 durch den Kanal gezogen. Dabei wird der Georadarmesskopf 12 relativ zum Kanalinspektionsfahrzeug 10 auf einer Kreisbahn 77 bewegt. Diese Kreisbahn 77 überlagert sich mit der Bewegung entlang einer translatorischen Bahn 79, die das Kanalinspektionsfahrzeug 10 im Kanal zurücklegt. Durch die Kombination der beiden Bewegungen ergibt sich eine schraubenförmige Messkopfbahn 78.

Der in Figur 4 nicht eingezeichnete Positionssensor 56 gibt dann, wenn die Welle 18 einen vorbestimmten Drehwinkel aufweist, ein Signal an die in Figur 4 ebenfalls nicht eingezeichnete zentrale Steuerung 58, die daraufhin einen Triggerimpuls an die Georadarmesskopf-Steuerung 40 abgibt. Der entsprechende Triggerimpuls wird bspw. per Funk übertragen, wobei die Funkschnittstelle, die aus der Sendeeinheit 48 und der Empfangseinheit 50 besteht, verwendet wird. Dazu ist die Sendeeinheit 48 auch zum Empfang elektromagnetischer Signale ausgebildet und die Empfangseinheit 50 auch zum Senden derartiger Signale. Aufgrund des Triggersignals steuert die Georadarmesskopf-Steuerung 40 den Georadarmesskopf 12 so an, dass dieser einen Radarimpuls abgibt. Dieser Radarimpuls wird vom Georadarmesskopf 12, der sich auf einer kreisförmigen Bahn relativ zur Kanalinspektionsfahrzeug 10 bewegt, nach außen in Richtung auf die Wand des Kanals 76 zu abgesendet.

Zur Kanalinspektion wird das Kanalinspektionsfahrzeug 10 so im Kanal 76 positioniert, dass der Mittelpunkt der kreisförmigen Bahn mit dem Mittelpunkt des Querschnitts des (kreisförmigen) Querschnitts des Kanals 76 übereinstimmt (Figur 4). Anschließend wird das Kanalinspektionsfahrzeug am Stahlsseil 60 durch den Kanal gezogen. Alternativ bewegt es sich ferngesteuert aus eigener Kraft durch den Kanal. Während dieser translatorischen Bewegung wird der Georadarmesskopf 12 durch den Motor 38 auf einer Gleisbahn bewegt. Der in Figur 4 nicht eingezeichnete Wegmesser 65 erfasst die Position des Kanalinspektionsfahrzeuges entlang seiner translatorischen Bahn. Der Positionssensor 56 misst über den Winkel zwischen Welle 18 und Aufbau 26 beständig den Neigungswinkel des Georadarmesskopfs 12 gegen die Horizontale und übermittelt das Messergebnis an die zentrale Steuerung 58 (Figur 1). Sofern der Georadarmesskopf 12 getriggert betrieben wird, gibt die zentrale Steuerung 58 dann einen Befehl zur Aufnahme eines Messpunkts ab, wenn sich der Georadarmesskopf an einer vorbestimmten Position auf der ebenen, geschlossenen Bahn befindet.

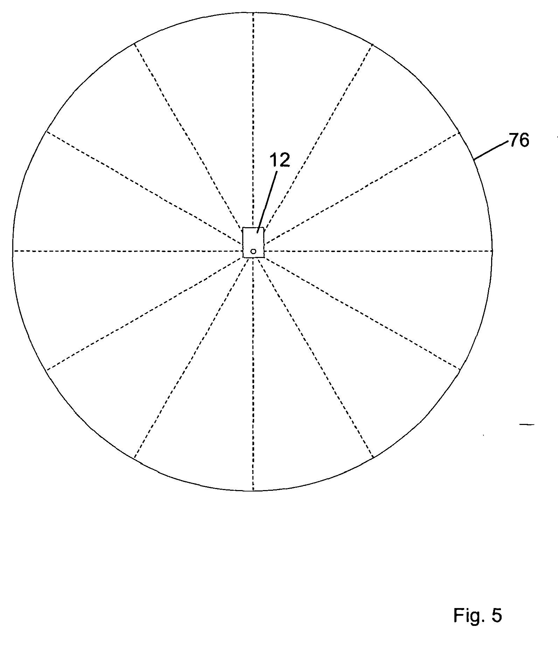

Im vorliegenden Fall wird der Radarwellenimpuls immer dann ausgelöst, wenn sich der Georadarmesskopf 12 um einen Winkel gegen die Horizontale geneigt ist, der ein ganzzahliges Vielfaches von 30° beträgt. Figur 5 zeigt den Strahlverlauf der Radarwellen eines Georadarmesskopfs 12, der um seine Längsachse rotiert. Dadurch, dass alle 30° ein Messpunkt aufgenommen wird, ergeben sich bei translatorischer Bewegung des Kanalinspektionsfahrzeugs 10 durch den Kanal 76 zwölf Längsprofile.

Nachdem vom Georadarmesskopf 12 ein Radarpulsimpuls angegeben worden ist, wird das reflektierte Signal ebenfalls vom Georadarmesskopf 12 gemessen. Dazu wird die Feldstärke der reflektierten Welle mit einer Antennenfrequenz von 500 MHz gemessen. Ein derartiges Verfahren ist im Stand der Technik bekannt und kann Standardliteratur entnommen werden. Alternative Antennenfrequenzen liegen im Bereich von ca. 100 MHz bis ca. 600 MHz.

Die so erhaltenen Messdaten werden vom Georadarmesskopf 12 (Figur 1) an die Georadarmesskopf-Steuerung 40 weitergeleitet und von dort über die Sendeeinheit 48 und die Empfangseinheit 50 an die zentrale Steuerung 58 übermittelt. Diese schreibt die Messdaten in den Speicher 52, wo sie nach Beendigung der Messfahrt von einem externen Rechner ausgelesen und weiterverarbeitet werden. Der Vorschub entlang der translatorischen Bahn und die Rotationsgeschwindigkeit des Georadarmesskopfs werden so aufeinander abgestimmt, dass zwei Messpunkte in Richtung der translatorischen Bahn einen Abstand von 2 cm bis 3 cm haben.

Um die Messdaten besser auswerten zu können, wird die Messfahrt mit einer (hier nicht gezeigten) Kamera aufgezeichnet. Das oben beschriebene Georadarmesssystem und die Kamera werden dabei miteinander synchronisiert, so dass bei der Auswertung der Georadarmessdaten anhand der Kamerabilder festgestellt werden kann, wie der Kanal an der betreffenden Stelle ausgesehen hat. Eine derartige Synchronisation wird bspw. dadurch erreicht, dass das Georadarmesssystem und die Kamera jeweils eine Uhr umfassen und beide Uhren synchronisiert sind. Zu jedem vom Georadarmesskopf aufgenommenen Messpunkt wird zusätzlich die Uhrzeit ermittelt und gespeichert. Die Bilder der Kamera werden ebenfalls mit der jeweiligen Zeit versehen.

## Patentansprüche

1. Kanalinspektionsfahrzeug mit einem Georadarmesskopf (12), einem Aufnahmeelement (14) für den Georadarmesskopf (12) und Mitteln zum translatorischen Bewegen (30, 32, 60) des Kanalinspektionsfahrzeugs (10), und mit Antriebsmitteln (38) für das Aufnahmeelement (14) zum Bewegen des Georadarmesskopfs (12) auf einer ebenen, geschlossenen Bahn (77), die in einer Ebene liegt, die senkrecht zu der Richtung der translatorischen Bewegung (79) verläuft,
**gekennzeichnet durch** mindestens einen Positionssensor (56) zur Bestimmung der Position des Georadarmesskopfs (12) auf der ebenen, geschlossenen Bahn (77).

2. Kanalinspektionsfahrzeug nach Anspruch 1,
**dadurch gekennzeichnet, dass** das Aufnahmeelement (14) derart ausgebildet ist, um den Georadarmesskopfs (12) auf einer Kreisbahn (77) zu bewegen, insbesondere um ihn um seine Achse zu rotieren.

3. Kanalinspektionsfahrzeug nach einem der vorstehenden Ansprüche,
**dadurch gekennzeichnet, dass** der Georadarmesskopf (12) die Radarwellen jeweils in eine Richtung abstrahlt, die in der Ebene verläuft, in der die ebene, geschlossene Bahn (77) liegt, die senkrecht zur Tangente an die ebene, geschlossene Bahn (77) verläuft und die relativ zur ebenen, geschlossenen Bahn nach außen weist.

4. Kanalinspektionsfahrzeug nach einem der vorstehenden Ansprüche,
**dadurch gekennzeichnet, dass** der Georadarmesskopf (12) eine Georadarmesskopf-Steuerung (40) zur Erzeugung gepulster Radarwellen umfasst.

5. Kanalinspektionsfahrzeug nach Anspruch 4,
**dadurch gekennzeichnet, dass** die Georadarmesskopf-Steuerung (40) ausgebildet ist, um Georadarwellenimpulse mit einer Pulsdauer von unter 20 ns, insbesondere unter 3 ns zu erzeugen.

6. Kanalinspektionsfahrzeug nach einem der Ansprüche 4 oder 5
**dadurch gekennzeichnet, dass** der Georadarmesskopf Empfangsmittel umfasst, die vorzugsweise mit der Georadarmesskopf-Steuerung (40) in Verbindung stehen, zum:
- Empfangen von reflektierten Georadarwellenimpulsen und
- Messen der Feldstärke der reflektierten Georadarwellenimpulsen zu unterschiedlichen, vorzugsweise zeitlich äquidistant zueinander liegenden, Zeitpunkten nach Senden des jeweiligen Georadarwellenimpulses.

7. Kanalinspektionsfahrzeug nach einem der Ansprüche 4 bis 6,
**dadurch gekennzeichnet, dass** die Georadarmesskopf-Steuerung (40) so zum Steuern des Georadarmesskopfs (12) ausgebildet ist, dass dieser Radarwellen abgibt, die aus wenigen, insbesondere höchstens 5 bis 10, Schwingungsperioden bestehen, insbesondere nur aus einer einzigen Schwingungsperiode.

8. Kanalinspektionsfahrzeug nach einem der Ansprüche 4 bis 7,
**dadurch gekennzeichnet, dass** mittels der Georadarmesskopf-Steuerung (40) gepulste Radarwellen mit einer Impulsfolgefrequenz zwischen 30 kHz und 800 kHz erzeugbar sind.

9. Kanalinspektionsfahrzeug nach einem der vorstehenden Ansprüche,
**gekennzeichnet durch** einen Positionssensor (65) zur Bestimmung der Position des Georadarmesskopf (12) entlang eines Bewegungspfads der translatorischen Bewegung (79).

10. Kanalinspektionsfahrzeug nach einem der Ansprüche 4 bis 9,
**dadurch gekennzeichnet, dass** die Georadarmesskopf-Steuerung (40) ausgebildet ist, um den Georadarmesskopf (12) auf vorbestimmte Positionen auf der ebenen, geschlossenen Bahn (77) zur gepulsten Abgabe von Radarwellen anzusteuern.

11. Kanalinspektionsfahrzeug nach einem der vorstehenden Ansprüche,
**gekennzeichnet durch** eine mit dem Georadarmesskopf (12) in Verbindung stehende Sendeeinheit (48) zum Senden der Georadarmessdaten, die am Aufnahmeelement angeordnet ist, und **durch** eine mit der Sendeeinheit eine Funkschnittstelle bildende Empfangseinheit (50) zum Empfang der Georadarmessdaten, die nicht am Aufnahmeelement (14) angeordnet ist.

12. Kanalinspektionsfahrzeug nach einem der vorstehenden Ansprüche,
**gekennzeichnet durch** einen auslesbaren Datenspeicher zur Aufnahme der vom Georadarmesskopf gemessenen Daten, insbesondere einen auslesbaren Datenspeicher (52), der am Georadarmesskopf (12) angeordnet ist.

13. Verfahren zur Kanalinspektion mit dem Schritt:
- Bewegen eines Georadarmesskopfs (12) durch einen Kanal (76) entlang einer Messkopfbahn (78), die gebildet ist als Kombination einer Bewegung entlang einer translatorischen Bahn (79) und einer Bewegung auf einer ebenen, geschlossenen Bahn (77), die in einer Ebene liegt, die senkrecht zu der Richtung der translatorischen Bewegung verläuft,
**gekennzeichnet durch** den Schritt
- Aufnehmen von Georadarmesspunkten an Positionen auf dieser Messkopfbahn (78), insbesondere an vorbestimmten Positionen auf dieser Messkopfbahn (78), wobei ein Radarimpuls aufgrund einer von einem Positionssensor bei einem vorbestimmten Drehwinkel veranlassten Triggerimpuls abgegeben wird.

14. Verfahren nach Anspruch 13, zusätzlich mit dem Schritt:
- Berechnen eines radialen Tiefenprofils des zu inspizierenden Kanals (76) aus den aufgenommenen Georadarmesspunkten.

15. Verfahren nach einem der Ansprüche 13 bis 14,
**dadurch gekennzeichnet, dass** die ebene, geschlossene Bahn (77) die Form des Querschnitts des zu inspizierenden Kanals hat (76).

16. Verfahren nach einem der Ansprüche 13 bis 15,
**dadurch gekennzeichnet, dass** die ebene, geschlossene Bahn (77) eine Kreisbahn ist, auf welcher der Georadarmesskopf (12) rotiert.

17. Verfahren nach einem der Ansprüche 13 bis 16,
**dadurch gekennzeichnet, dass** das Aufnehmen von Georadarmesspunkten die folgenden Schritte umfasst:
- Senden von aufeinander folgenden Georadarwellenimpulsen,
- Empfangen von reflektierten Georadarwellenimpulsen und
- Messen der Feldstärke der reflektierten Georadarwellenimpulsen zu unterschiedlichen, vorzugsweise zeitlich äquidistant zueinander liegenden, Zeitpunkten nach Senden des jeweiligen Georadarwellenimpulses

18. Verfahren nach Anspruch 17,
**dadurch gekennzeichnet, dass** die Georadarwellenimpulse eine Pulsdauer von unter 20 ns, insbesondere unter 3 ns haben.

19. Verfahren einem der Ansprüche 17 oder 18,
**dadurch gekennzeichnet, dass** dass die Georadarwellenimpulse mit einer Impulsfolgefrequenz von 30 kHz bis 800 kHz, vorzugsweise 100 kHz bis 400 kHz, gesendet werden.

20. Verfahren nach einem der Ansprüche 13 bis 19,
**dadurch gekennzeichnet, dass** die Vorschubgeschwindigkeit in Richtung der translatorischen Bewegung zwischen 0,2 m/s und 20 m/s, insbesondere zwischen 0,5 m/s und 3 m/s beträgt.

21. Verfahren nach einem der Ansprüche 13 bis 20,
**gekennzeichnet durch** die Verwendung eines Kanalinspektionsfahrzeugs (10) nach einem der Ansprüche 1 bis 12.

22. Verfahren nach einem der vorhergehenden Ansprüche 13-21,
**dadurch gekennzeichnet, dass** der Radarwellenimpuls immer dann ausgelöst wird, wenn der Georadarmesskopf um einen Winkel gegen die Horizontale geneigt ist, der ein ganzzahliges Vielfaches von 30° beträgt.
